# EUROPÄISCHE PATENTSCHRIFT

(11) **EP 1 079 500 B1**
(45) Veröffentlichungstag und Bekanntmachung des Hinweises auf die Patenterteilung: **28.12.2011**
(21) Anmeldenummer: 00402122.6
(22) Anmeldetag: 24.07.2000
(51) Int. Cl.: H02K 3/14, H02K 3/40

(54) **Isolation eines Mehrfachparallelleiters für ölgekühlte Wicklungen**
Insulation of a multiple parallel conductor for oil cooled windings
Isolation d'une barre à conducteurs parallèles pour des enroulements refroidis à l'huile

(30) Priorität: 20.08.1999 DE 29914596 U
(43) Veröffentlichungstag der Anmeldung: 28.02.2001
(73) Patentinhaber: Essex Europe, 60200 Compiegne (FR)
(72) Erfinder: Krenzer, Hans-Joachim Dipl.-Ing., 34454 Arolsen (DE); Runge, Joachim, 34454 Arolsen (DE)
(74) Vertreter: Döring, Roger

(56) Entgegenhaltungen:
- WO-A-95/30991
- DE-A- 3 823 938
- PATENT ABSTRACTS OF JAPAN vol. 018, no. 320 (E-1563), 17. Juni 1994 (1994-06-17) & JP 06 070499 A (CENTRAL JAPAN RAILWAY CO;OTHERS: 01), 11. März 1994 (1994-03-11)

## Beschreibung

Die Erfindung betrifft einen Drilleiter gemäß dem Oberbegriff des Patentanspruchs 1.

Elektrische Leiter großen Querschnitts für Wicklungen von elektrischen Geräten und Maschinen, wie z. B. Transformatoren, werden in eine Anzahl voneinander elektrisch isolierter Teilleiter aufgeteilt, die an ihren Enden parallel geschaltet werden. Bei den sogenannten Drilleitern werden rechteckige Teilleiter aus Kupfer oder Aluminium zu einem etwa rechteckigen Gesamtquerschnitt zusammengefügt. Um den Einfluß der Stromverdrängung möglichst gering zu halten, wird über die Länge des Drilleiters eine sich ständig wiederholende Lagevertauschung der Teilleiter im Gesamtquerschnitt des Drilleiters vorgenommen. Zu diesem Zweck werden die Teilleiter mittels eines geeigneten Werkzeugs an vorbestimmten Stellen gekröpft und die Lage der Teilleiter im Drilleiter entsprechend gewandert.

Ein solches Verfahren zur Herstellung eines Drilleiters ist aus der DE 39 23 448 C1 bekannt.

Ein Drilleiter wird üblicherweise mit einer gemeinsamen Umwicklung aus Isolierbändern versehen, welche die Aufgabe hat, den Drilleiter beim Aufspulen auf eine Vorratsspule, beim Transport sowie beim Abspulen von der Vorratsspule zusammenzuhalten.

Insbesondere bei Transformatoren führen die auftretenden elektrischen Verluste zu einer erheblichen Erwärmung der für die Wicklungen verwendeten Drilleiter. Es ist deshalb bei solchen Geräten erforderlich, die Verlustwärme abzuführen. Hierzu wird üblicherweise Transformatorenöl verwendet. Die Effizienz der Kühlung hängt entscheidend von der Umwicklung der für die Wicklung verwendeten Drilleiter ab.

Aus der EP 0 746 861 B1 ist ein Mehrfachparallelleiter bekannt, bei dem die Teilleiter mit einem Webband umwickelt sind. Die Maschenweite des Webbandes beträgt dabei mindestens 2 mm. Die Schuß- und/oder Kettfäden bestehen aus Polyester oder einem Polyester enthaltenden Mischgarn. Um eine höhere Festigkeit des Webbandes und damit des Mehrfachparallelleiters zu erzielen, weist das Webband eine Webkante auf. Das Webband verbleibt auf dem Mehrfachparallelleiter und ist somit Teil der Wicklung. Der Vorteil einer solchen Wicklung besteht darin, daß eine gute Kühlung erzielt wird. Nachteilig ist, daß das Webband sehr aufwendig in der Herstellung und in sich sehr instabil ist, wodurch das Webband beim Umwickeln schwer handhabbar ist. Da das Webband sehr leicht verschoben werden kann, ist der bei der Wicklung einer Transformatorenspule erforderliche Wickelzug nur schwer aufrechtzuerhalten.

Die DE 38 23 938 A1 beschreibt einen Supraleiter mit mehreren Einzelleitern. Jeder Einzelleiter enthält supraleitende Leiteradern, die jeweils in einer Matrix aus einem elektrisch leitfähigen Kupfermaterial eingebettet sind. Jede dieser Matrizen bildet eine Einheit, die für sich genommen nicht elektrisch isoliert ist, sondern die untereinander auch elektrisch leitfähig sind. Jede Matrix ist Teil eines separaten Paketes, wobei die Pakete insgesamt zu einem supraleitenden Rechteckleiter zusammengefaßt sind. Der supraleitende Rechteckleiter ist seinerseits mit einer aus einem Folienband bestehenden, elektrischen Vollisollerung versehen, in welche zur Optimierung der Kühlung nachträglich Aussparungen eingebracht werden. Zum Erzeugen der Aussparungen wird ein Laser verwendet, dessen energiereicher Strahl die Aussparungen durch Schmelzen und Verbrennen des Isolationswerkstoffes erzeugt.

Der Erfindung liegt die Aufgabe zugrunde, einen Drilleiter der eingangs geschilderten Art anzugeben, der in besonders einfacher Weise herstellbar ist und eine besonders gute Wärmeableitung gewährleistet.

Diese Aufgabe wird durch die kennzeichnenden Merkmale des Patentanspruchs 1 gelöst.

Vorteilhafte Ausgestaltungen der Erfindung sind in den Unteransprüchen beschrieben.

Neben den sich aus der Aufgabe selbst ergebenden Vorteilen weist dieser Drilleiter noch den Vorteil auf, daß die aus dem perforierten Band bestehende Umwicklung mit in die Wicklung eines Transformators eingebracht wird und dort verbleibt. Das Material der Umwicklung ist mit Transformatorenöl verträglich. Die Umwicklung schafft zwischen den Teilleitern schmale Spalte, durch welche das Transformatorenöl hindurchtreten und somit die Kühlwirkung verbessert werden kann.

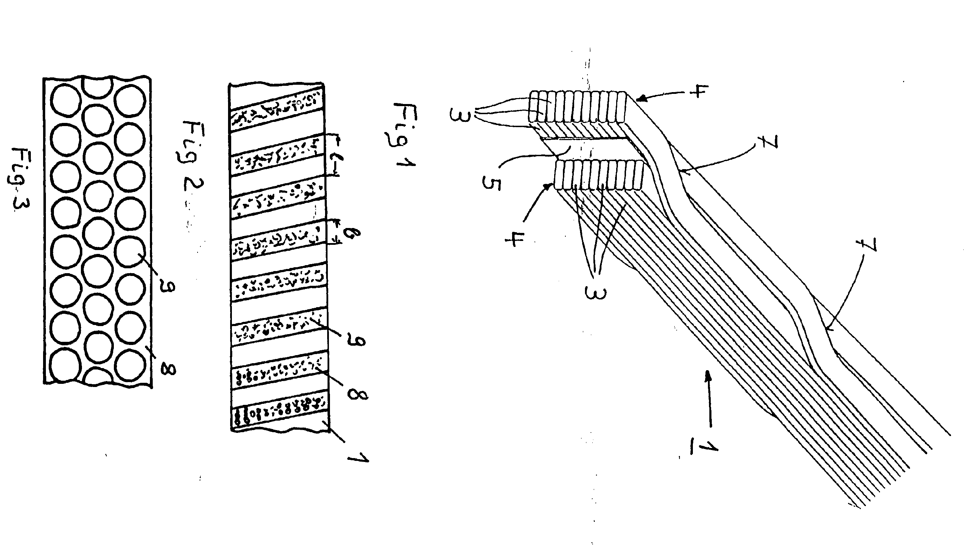

Die Erfindung wird im folgenden anhand der in den Fig. 1 bis 3 schematisch dargestellten Ausführungsbeispiele näher erläutert.

In Fig. 1 ist ein Drilleiter 1 dargestellt, wie er in Transformatorenwicklungen verwendet wird. Der Drilleiter 1 ist aus einer Vielzahl flacher, rechteckiger Teilleiter 3 aufgebaut, die in zwei nebeneinander liegenden Stapeln 4 angeordnet sind. Zwischen den beiden Stapeln 4 kann ein Papierband 5 vorgesehen sein. Jeder Teilleiter 3 ist mit einer Isolierlackschicht versehen. Die Teilleiter 3 sind in vorbestimmten Abständen durch Abbiegen flach gekröpft, so daß sich ihre Lage im Gesamtquerschnitt des Drilleiters 1 in vergleichsweise kurzen Abständen regelmäßig ändert. Die Kröpfungsstellen sind in Fig. 1 mit 7 bezeichnet.

Um die Stabilität des Drilleiters 1 zu erhöhen, ist dieser gemäß Fig. 2 mit einer Bewicklung aus einem Band 8 versehen, welches mit einer Vielzahl von Perforationen bzw. Löchern 9 versehen ist. Das Band 8 ist mit einer Schlaglänge I auf den Drilleiter 1 aufgebracht, die größer ist als die Breite b des Bandes 8. Die Perforationen bzw. Löcher 9 weisen vorzugsweise einen Querschnitt von mehr als 4 mm² auf. Die Perforationen bzw. Löcher 9 sowie der Abstand zwischen zwei benachbarten Windungen des Bandes 8 garantieren einen optimalen Zutritt des Transformatorenöls zu den Teilleitern 3, so daß eine hervorragende Kühlung bei gleichzeitiger mechanischer Stabilität des Drilleiters 1 erzielt wird.

Als Werkstoff für das Band 8 haben sich Materialien als vorteilhaft erwiesen, die zum einen eine hohe Zugfestigkeit, zum anderen eine gute Verträglichkeit mit dem Transformatorenöl aufweisen. So kommen Bänder aus Zellulose, Aramid oder aus Mineral- oder Glasfasern in Frage, die mit einem verbackfähigen Harz, z. B. Epoxidharz beschichtet sein können.

Die Querschnittsform der Perforierungen bzw. Löcher 9 kann beliebig sein, z. B. rund, drei- oder mehreckig, wobei ein Optimum zwischen Durchlässigkeit und Zugfestigkeit erreicht werden sollte.

Fig. 3 zeigt die Draufsicht auf ein Band 8, welches mit Perforationen bzw. Löchern 9 versehen ist. Die Löcher sind rund und haben einen Querschnitt von mehr als 4 mm². Die Bandbreite beträgt 29 mm. Als Material wurde Polyaramid gewählt, welches eine hohe Reißfestigkeit aufweist.

## Patentansprüche

1. Drilleiter für in Transformatorenöl eingebettete Wicklungen von Transformatoren, welcher eine Mehrzahl von jeweils einzeln elektrisch isolierten Teilleitern aufweist. die gemeinsam mit einer Umwicklung versehen sind, **dadurch gekennzeichnet,**
**daß** die Umwicklung aus einem Perforierungen (9) aufweisenden Band (8) besteht und
- **daß** das Band (8) um den Drilleiter mit einer Steigung (I) herumgewickelt ist, die zur Erzeugung eines Abstandes zwischen benachbarten Windungen des Bandes (8) größer als die Breite (b) des Bandes (8) ist.

2. Drilleiter nach Anspruch 1, **dadurch gekennzeichnet, daß** die durch das Band (8) erzeugte Bedeckung desselben weniger als 50 % seiner Oberfläche beträgt.

3. Drilleiter nach Anspruch 1 oder 2, **dadurch gekennzeichnet, daß** der Querschnitt der Perforierungen (9) mindestens 4mm² beträgt.

4. Drilleiter nach einem der Ansprüche 1 bis 3, **dadurch gekennzeichnet, daß** das Band (8) aus einem Material auf Basis Zellulose besteht.

5. Drilleiter nach einem der Ansprüche 1 bis 3, **dadurch gekennzeichnet, daß** das Band (8) aus Aramid besteht.

## Claims

1. A transposed conductor for the use of transformer windings which are embedded into a transformer oil, which comprises a plurality of individually electrically insulated partial conductors, which are surrounded by a common wrapping, **characterized in**
- **that** the wrapping consists of a ribbon (8) which has perforations (9) and
- **that** the ribbon (8) is wound around the transpo se d conductor with a pitch (1) which is greater than the width (b) of the ribbon (8) to achieve a space between the neighbouring windings of the ribbon (8).

2. A transposed conductor according to claim 1, **characterized in that** the ribbon (8) covers less than 50% of the outer surface of the conductor.

3. A transposed conductor according to claim 1 or 2, **characterized in that** the cross sectionofthe perforations (9) is at least 4mm².

4. A transposed conductor according to one of the clams 1 to 3, **characterized in that** the ribbon (8) is made ofa material based on cellulose.

5. A transposed conductor according to one of the claims 1 to 3, **characterized in that** the ribbon (8) is made of aramide.

## Revendications

1. Conducteur torsadé pour enroulements de transformateurs immergés dans de l'huile de transformateur, le conducteur présentant plusieurs conducteurs partiels isolés électriquement de manière séparée et dotés d'un recouvrement enroulé commun,
- **caractérisé en ce que**
- le recouvrement enroulé est constitué d'un ruban (8) qui présente des perforations (9) et
- **en ce que** le ruban (8) est enroulé autour du conducteur torsadé à un pas (1) supérieur à la largeur (b) du ruban (8) pour former une distance entre des tours voisins du ruban (8).

2. Conducteur torsadé selon la revendication 1, **caractérisé en ce que** son recouvrement formé parle ruban (8) représente moins de 50 % de sa surface.

3. Conducteur torsadé selon les revendications 1 ou 2, **caractérisé en ce que** la section transversale des perforations (9) vaut au moins 4 mm²_{.}

4. Conducteur torsadé selon l'une des revendications 1 à 3, **caractérisé en ce que** le feuillard (8) est constitué d'un matériau à base de cellulose.

5. Conducteur torsadé selon l'une des revendications 1 à 3, **caractérisé en ce que** le feuillard (8) est constitué d'un matériau à base d'aramide.
